(19) Europäisches Patentamt
European Patent Office
Office européen des brevets

(11) **EP 4 672 639 A1**

(12) **EUROPEAN PATENT APPLICATION**

(43) Date of publication:
**31.12.2025   Bulletin 2026/01**

(21) Application number: **24185537.8**

(22) Date of filing: **28.06.2024**

(51) International Patent Classification (IPC):
***H04B 10/70*** *(2013.01)*

(52) Cooperative Patent Classification (CPC):
**H04B 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Vrije Universiteit Brussel
1050 Brussel (BE)**

(72) Inventors:
• **COOSEMANS, Jan
1060 Sint-Gillis (BE)**
• **KUIJK, Maarten
2018 Antwerpen (BE)**
• **JACOBS, Valéry Ann
5563 Houyet (BE)**

(74) Representative: **Winger
Mouterij 16 bus 101
3190 Boortmeerbeek (BE)**

(54) **OPTICAL DATA SYMBOL DETECTION USING A SINGLE-PHOTON DETECTION CIRCUIT**

(57)      An optical data symbol detection circuit (90) comprises:
- at least one single-photon detection circuit (100) configured to generate trigger events (d1) in response to an incident light signal comprising photons, the incident light signal encoding data symbols;
- a reference signal generator (105) configured to provide a reference demodulation signal ($V_{demod}$);
- a discrimination mechanism (125) configured to identify trigger events based on their temporal alignment with the reference demodulation signal ($V_{demod}$); and
- at least one correlation system (126) configured to adjust the contribution of each identified trigger event to an output signal ($V_{symbol}$) based on its synchronization with the reference demodulation signal ($V_{demod}$).

**FIG. 1**

EP 4 672 639 A1

Processed by Luminess, 75001 PARIS (FR)

## Description

## Field of the invention

The present invention relates to the field of optical data communication, specifically to systems and methods for detecting data symbols encoded in light signals.

## Background of the invention

In the realm of optical data communication, the transmission and reception of data through light signals represent a cornerstone of modern telecommunication systems. This technology leverages the vast bandwidth and speed of light to transmit information over both short and long distances, encompassing applications ranging from internet backbone infrastructures to local area networks and point-to-point communication links. At the heart of these systems lies the challenge of accurately detecting and decoding the data symbols-such as bits-encoded within the light signals.

The process of optical data communication involves encoding data symbols onto a light signal, which then traverses a communication channel to reach a data receiver. The receiver's primary task is to accurately distinguish between the different data symbols encoded in the incoming light signal. This necessitates the conversion of the optical signal, composed of photons, into an electrical signal that can be further processed and interpreted. Optical detectors, such as PIN diodes and Avalanche Photodiodes (APDs), are traditionally employed for this purpose, converting the incident light power into a proportional electrical current. This current is often amplified using circuits like transimpedance amplifiers to enhance the signal's detectability.

However, the presence of photons not associated with the desired data signal-such as ambient light-introduces noise into the system. This noise is also amplified by the amplification circuitry, degrading the Signal-to-Noise Ratio (SNR) and increasing the uncertainty in symbol decision. Furthermore, the amplification systems themselves can introduce additional noise, compounding the problem.

An alternative approach involves the use of Single-Photon Avalanche Diodes (SPADs), which operate under a high reverse voltage to detect the incidence of single photons. While SPADs offer the advantage of generating a detectable current from a single photon event, they also require intricate circuitry to manage the large current generated and to prevent damage to the device. Moreover, SPADs are susceptible to dark triggers-false positives generated in the absence of actual photon incidence-further complicating the detection process.

The detection of optical data symbols is further challenged by the need for a 'dead time' following each detection event, during which the SPAD is unable to detect new photons. This limitation necessitates the use of SPAD arrays to improve detection rates, yet this approach introduces its own set of challenges, including the equal contribution of noise-induced triggers to the output signal.

Despite the advancements in optical data communication technologies, there remains a significant need for further innovation to overcome these challenges. The accurate detection of data symbols in the presence of noise and the efficient management of SPAD limitations are critical areas requiring attention to enhance the reliability and efficiency of optical data communication systems.

## Summary of the invention

It is an object of embodiments of the present invention to enhance the signal-to-noise ratio in optical data communication. This objective is accomplished by an optical data symbol detection circuit according to the invention.

In a first aspect, the present invention relates to an optical data symbol detection circuit comprising:

- at least one single-photon detection circuit configured to generate trigger events in response to an incident light signal comprising photons, the incident light signal encoding data symbols;
- a reference signal generator configured to provide a reference demodulation signal;
- a discrimination mechanism configured to identify trigger events based on their temporal alignment with the reference demodulation signal, thereby selectively filtering out noise-induced triggers; and
- at least one correlation system configured to adjust the contribution of each identified trigger event to an output signal based on its synchronization with the reference demodulation signal.

This enables distinguishing data symbols with high certainty by correlating trigger events with the demodulation signal.

In embodiments, the discrimination mechanism and the correlation system may comprise:

- at least one toggling circuit configured to generate two non-overlapping signals from the trigger event, and
- at least one switched capacitor circuit comprising:

  - a local capacitor for receiving charge from the reference demodulation signal,
  - a global capacitor for accumulating charge corresponding to trigger events, the accumulated charge being indicative of the received data symbols, and
  - a switching mechanism comprising a first switch coupled between the reference signal generator and the local capacitor, and a second switch coupled between the local capacitor and the global capacitor, the non-overlapping signals generated by the toggling circuit being used for controlling the first switch and second switch, respectively.

This set-up provides an efficient circuit implementation for correlating trigger events with the demodulation signal.

In embodiments, the optical data symbol detection circuit may comprise a plurality of single-photon detection circuits. This allows increasing the detection speed and saturation threshold.

In such embodiments, each single-photon detection circuit may be associated with a local capacitor and a switching mechanism for transferring charge in response to trigger events to a global capacitor. The global capacitor may be common to the plurality of single-photon detection circuits. This enables an array implementation with a shared output.

In embodiments, the optical data symbol detection circuit may further comprise a demultiplexing circuit for processing multiple independent data streams encoded in the incident light signal. The demultiplexing circuit may include multiple global capacitors, each associated with a different data stream and corresponding demodulation signal. This allows simultaneous demodulation of multiple data streams.

In embodiments, the optical data symbol detection circuit may further comprise a reset mechanism configured to reset the voltage on the global capacitor to a predetermined reset voltage after a symbol period. The reset mechanism may include a reset transistor connected to the global capacitor. This prepares the circuit for the next symbol detection cycle.

In embodiments, the optical data symbol detection circuit may further comprise a symbol decision circuit, for instance including a comparator, for converting an analog voltage on the global capacitor to a digital signal representing the received data symbols. This provides the final (digital) output data signal.

In embodiments, the reference signal generator may be configured to provide a reference demodulation signal with adjustable modulation characteristics, such as adjustable phase and frequency characteristics. This allows optimizing the correlation between the received light signal containing the data symbols and the reference demodulation signal.

In embodiments, the optical data symbol detection circuit may furthermore comprise at least one adaptive feedback system connected to the reference signal generator, configured to dynamically adjust the modulation characteristics of the reference demodulation signal based on the output signal to optimize the correlation with encoded data symbols in the incident light signal. The adaptive feedback system may comprise a phase-locked loop (PLL) for synchronizing the modulation characteristics of the reference demodulation signal with corresponding characteristics of the incident light signal containing the encoded data symbols. This enables aligning the incoming light signal and the reference demodulation signal.

In embodiments, the correlation system may be configured such that only trigger events aligned with predetermined active periods of the reference demodulation signal contribute to the output signal. This maximizes the signal-to-noise ratio.

In embodiments, the at least one single-photon detection circuit may comprise a single-photon avalanche diode (SPAD). SPADs provide high sensitivity for single photon detection.

In embodiments, the reference signal generator may be configured to generate a reference demodulation signal that is a periodic waveform, such as a sine wave, a rectangular wave, or a triangular wave. The shape can be selected based on the modulation used.

In a second aspect, the present invention relates to a method for detecting optical data symbols, the method comprising:

- generating a reference demodulation signal;
- converting incident light into an electrical signal by generating trigger events using a single-photon detection circuit;
- identifying trigger events based on their temporal alignment with the reference demodulation signal; and
- adjusting the contribution of each identified trigger event to an output signal based on its synchronization with the reference demodulation signal.

In a third aspect, the present invention relates to a data symbol transmitter-receiver system, comprising:

- a data symbol transmission circuit comprising a photon source, and a photon source modulator for modulating the photon source so as to generate a light signal encoding data symbols,
- an optical data symbol detection circuit according to any embodiments of the first aspect.

This provides a complete optical communication system.

It is an advantage of embodiments of the present invention that a high Signal-to-Noise Ratio (SNR) for symbol decision in optical data communication can be achieved by mitigating the effect of unwanted Single-Photon Avalanche Diode (SPAD) triggers. It is a further advantage of embodiments of the present invention that the correlation of trigger events with a demodulation signal allows for the selective filtering out of noise-induced triggers, thereby enhancing the accuracy of data symbol detection. Another advantage of embodiments of the present invention is that the use of a switched-capacitor system enables the precise adjustment of the contribution of each identified trigger event to the output signal, based on its synchronization with the reference demodulation signal. It is also an advantage of embodiments of the present invention that the incorporation of a reset mechanism allows for the voltage on the global capacitor to be reset to a predetermined reset voltage after a symbol period, thus preparing the system for the detection of the next symbol without interference from previous symbols.

Moreover, it is an advantage of embodiments of the present invention that the adoption of multiple SPAD microcells in an array configuration reduces the effect of dead time and increases the detector's speed or saturation threshold. It is a further advantage that the implementation of a demultiplexing circuit for processing multiple independent data streams encoded in the incident light signal enables the simultaneous detection of multiple data streams, thereby increasing the throughput of the optical data communication system. Additionally, the possibility to adjust the modulation characteristics of the reference demodulation signal, including its phase and frequency, based on the output signal, optimizes the correlation with encoded data symbols in the incident light signal, which is an advantage for achieving high fidelity in symbol detection.

Another advantage of embodiments of the present invention is that the configuration of the single-photon detection circuit with a single-photon avalanche diode (SPAD) ensures high sensitivity to photon detection, enabling the effective conversion of incident light into electrical signals for data symbol detection. Furthermore, the ability to generate a reference demodulation signal that is a periodic waveform, such as a sine wave, rectangular wave, or triangular wave, provides flexibility in adapting the detection system to various modulation schemes used in optical data communication.

In summary, embodiments of the present invention provide a comprehensive solution for enhancing the detection of optical data symbols in communication systems, offering advantages in terms of noise mitigation, accuracy, speed, and flexibility, thereby facilitating reliable and efficient optical data communication.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

The invention will now be described further, by way of example, with reference to the accompanying drawings, in which:

FIG. 1 is a schematic diagram of an optical data symbol detection circuit according to embodiments of the present invention.

FIG. 2 is a graphical representation of digital data symbols and their encoding in an optical signal, along with the corresponding demodulation signal and output voltage.

FIG. 3 is a graphical representation illustrating the use of a digital rectangular waveform for the demodulation signal and its effect on the output voltage for different symbols, according to embodiments of the present invention.

FIG. 4 is an eye diagram illustrating the distinction between two different symbols and the negligible effect of noise on the output voltage, according to embodiments of the present invention.

FIG. 5 is a graphical representation showing the cancellation effect on ambient modulated light with orthogonal and phase-shifted frequencies, according to embodiments of the present invention.

FIG. 6 is a graphical representation of the phase alignment process between the demodulation signal and the optical signal containing data, facilitated by a feedback system, according to embodiments of the present invention.

FIG. 7 is a schematic diagram of an optical data symbol detection circuit utilizing an array of single-photon detection circuits, each with its local capacitor and switching mechanism, according to embodiments of the present invention.

FIG. 8 is a schematic diagram of an optical data symbol detection circuit employing a current source to adjust the charge on the global capacitor, according to embodiments of the present invention.

FIG. 9 is a graphical representation of an improved form of On-Off Keying (OOK) enabled by the circuit in FIG. 8, according to embodiments of the present invention.

FIG. 10 is a schematic diagram of an optical data symbol detection circuit capable of processing multiple independent data streams, according to embodiments of the present invention.

FIG. 11 is a graphical representation of two independent data streams and their encoded optical signals, demonstrating the demultiplexing capability of the circuit in FIG. 10, according to embodiments of the present invention.

FIG. 12 is a schematic diagram of a symbol decision circuit including a comparator for converting an analog voltage on the global capacitor to a digital signal, according to embodiments of the present invention.

FIG. 13 is a schematic diagram of an optical data symbol detection circuit with adjustable capacitors for tuning the rate of change in the output voltage, according to embodiments of the present invention.

FIG. 14 is a schematic diagram of an optical data symbol detection circuit featuring an excess voltage regulator to adjust the sensitivity of the single-photon detection circuit, according to embodiments of the present invention.

FIG. 15 is a schematic representation of a transmitter-receiver communication system utilizing the optical data symbol detection circuit for wireless data transmission, according to embodiments of the present invention.

FIG. 16 is a schematic representation of a transmitter-receiver communication system transmitting data over a light-guiding channel, and using an optical data symbol detection circuit at the receiver side, according to embodiments of the present invention.

FIG. 17 is a schematic representation of a duplex communication system incorporating optical data transmitters and receivers for bidirectional data communication, according to embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to particular drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

"Optical data symbol detection" is the process of interpreting and identifying data symbols from optical signals, typically in systems like optical communication networks. It involves converting light signals, which carry encoded information, into electrical signals and then decoding these electrical signals to retrieve the transmitted data. This process is critical for ensuring accurate and efficient data transmission in optical fiber networks and other optical communication systems.

As used herein, and unless otherwise specified, the term "optical data symbol detection circuit" refers to a circuit that detects data symbols encoded in an incident light signal by generating trigger events in response to photons in the incident light signal, identifying trigger events based on their temporal alignment with a reference demodulation signal, and adjusting the contribution of each identified trigger event to an output signal based on its synchronization with the reference demodulation signal. Examples of optical data symbol detection circuits include, but are not limited to, the circuits designated by reference numbers 90, 600, 800, 1000, 1100 and 1200 in the claims and any accompanying figures.

As used herein, and unless otherwise specified, the term "single-photon detection circuit" refers to a circuit that generates an electrical trigger event in response to detecting a single photon or a small number of photons. An example of a single-photon detection circuit is a circuit that includes a single-photon avalanche diode (SPAD).

As used herein, and unless otherwise specified, the term "trigger event" refers to an electrical signal or pulse generated by a single-photon detection circuit in response to detecting individual photons or a small number of photons in an incident light signal. Examples of trigger events include, but are not limited to, electrical pulses or spikes produced by a single-photon avalanche diode (SPAD) when it detects one or more photons, e.g. by absorbing a photon and triggering an avalanche breakdown.

As used herein, and unless otherwise specified, the term "reference demodulation signal" refers to a periodic electrical signal used for demodulating or decoding data symbols encoded in an incident light signal. The reference demodulation signal refers to a signal used to identify and selectively filter trigger events based on their temporal alignment with the reference demodulation signal. The reference demodulation signal can be a waveform such as a sine wave, rectangular wave, or triangular wave, with a frequency and phase corresponding to the modulation of the incident light signal. The reference demodulation signal may have adjustable modulation characteristics, such as adjustable phase and frequency characteristics, to optimize correlation with encoded data symbols in the incident light signal. Examples of reference demodulation signals include a square wave with a 50% duty cycle and a frequency matching the symbol rate of the encoded data.

As used herein, and unless otherwise specified, the term "temporal alignment" refers to the timing relationship or synchronization between trigger events and the reference demodulation signal. Trigger events are considered temporally aligned with the reference demodulation signal when they occur during specific portions or phases of the reference demodulation signal waveform. For example, trigger events occurring during the high level of a square wave reference demodulation signal can be considered temporally aligned, while those occurring during the low level are not.

As used herein, and unless otherwise specified, the term "non-overlapping signals" refers to two or more electrical signals or pulses that do not have any temporal overlap, i.e., they are not simultaneously in an active or high state. Examples of non-overlapping signals include two clock signals with opposite phases, such that when one signal is high, the other is low, and vice versa.

As used herein, and unless otherwise specified, the term "correlation system" refers to a system that adjusts the contribution of each identified trigger event to an output signal based on its synchronization with the reference demodulation signal. Examples of correlation systems include, but are not limited to, systems that use switched capacitor circuits to accumulate charge on a capacitor based on the synchronization of trigger events with the reference demodulation signal, where the accumulated charge represents the received data symbols.

As used herein, and unless otherwise specified, the term "switched capacitor circuit" refers to an electronic circuit that uses a combination of switches and capacitors to process and manipulate electrical signals. The switches are used to control the charging and discharging of the capacitors, enabling functions such as sampling, holding, and transferring charge.

As used herein, and unless otherwise specified, the term "adaptive feedback system" refers to a system that dynamically adjusts the modulation characteristics of the reference demodulation signal based on the output signal to optimize the correlation with encoded data symbols in the incident light signal. Examples of adaptive feedback systems include, but are not limited to, phase-locked loops (PLLs) that synchronize the modulation characteristics of the reference demodulation signal with corresponding characteristics of the incident light signal containing the encoded data symbols.

As used herein, and unless otherwise specified, the term "symbol period" refers to the duration of time allocated for the transmission or reception of a single data symbol in a communication system. The symbol period is typically determined by the modulation scheme and the desired data rate. For example, in a system with a data rate of 1 megabit per second (Mbps) and a binary modulation scheme, the symbol period would be 1 microsecond, corresponding to the time required to transmit a single bit.

In the context of the present invention, which is the context of optical symbol data detection using Single-Photon Avalanche Diodes (SPADs), "dead time" refers to the period immediately following the detection of a photon during which the SPAD is unable to detect another photon. After a SPAD detects a photon and triggers an avalanche, it requires a certain amount of time to quench the avalanche current, reset and become ready to detect subsequent photons. It is this recovery period which is known as the dead time. Dead time is a critical parameter because it limits the maximum count rate of the SPAD and can affect the accuracy and efficiency of photon detection, particularly in high-speed optical communication systems.

The invention will now be described by a detailed description of several embodiments thereof. It is clear that other embodiments of the invention can be configured according to the knowledge of persons skilled in the art without departing from the technical teaching of the invention, the invention being limited only by the terms of the appended claims.

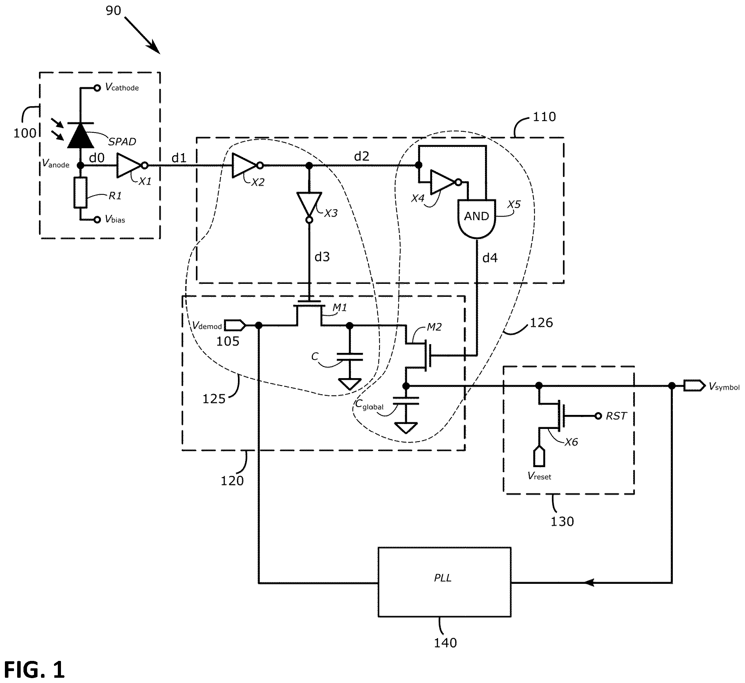

FIG. 1 illustrates a data symbol detection circuit 90 in accordance with one embodiment of the present invention. The circuit 90 comprises a single-photon detection circuit 100, which generates a digital pulse d1 representing the incidence of a photon. The digital pulse d1 is coupled to a toggling circuit 110, which generates non-overlapping signals d3 and d4 enabling the toggling of a switched-capacitor system 120. The switched-capacitor system 120 comprises a reference signal generator 105 for generating a demodulation signal $V_{demod}$, or is provided with an input port for receiving a demodulation signal $V_{demod}$. The switched-capacitor system 120 further comprises two switches, e.g. transistor switches M1 and M2, a first (local) capacitor C and a second (global) capacitor $C_{global}$. The toggling circuit 110 and the switched-capacitor system 120 together form a discrimination mechanism 125 configured to identify trigger events based on their temporal alignment with the reference demodulation signal $V_{demod}$, and a correlation system 126 configured to adjust the contribution of each identified trigger event to an output signal $V_{symbol}$ based on its synchronization with the reference demodulation signal $V_{demod}$.

The voltage on the second capacitor $C_{global}$, hence the voltage of the output signal $V_{symbol}$ is used by a feedback system 140, such as a Phase-Locked Loop (PLL), to adjust the properties of the demodulation signal $V_{demod}$, e.g. the phase and frequency, to optimize the correlation with the light signal containing the data symbols. In this particular embodiment, a reset function 130 is provided comprising a reset transistor X6 connected to the second capacitor $C_{global}$ which pulls the voltage towards the reset voltage $V_{reset}$ after a symbol period $T_s$.

In the embodiment illustrated in FIG. 1, the single-photon detection circuit 100, comprises a SPAD of the which the anode d0 is connected in series to quenching resistor R1 and an inverter X1 which converts the current pulse into a clean digital voltage pulse d1. It is to be noted that there are many quenching and rearming approaches possible which can all be used within embodiment of the present invention. In embodiments, as explained later, it is possible to use two or more data streams and two or more global capacitors. In embodiments, it is possible to use multiple (orthogonal) frequencies to encode multiple data streams and demodulate in multiple capacitors.

When turning back to the input side of the data symbol detection circuit 90, the digital pulse d1 generated by inverter X1 is coupled to the toggling circuit 110, which generates the non-overlapping clock signals d3 and d4, where one signal d3 controls the first switch, e.g. is connected to the gate of a first transistor switch M1, and the other (non-overlapping) signal d4, controls the second switch, e.g. is connected to the gate of a second transistor switch M2. When no trigger event occurs, switch M1 is conducting, shorting the local capacitor C to the demodulation signal $V_{demod}$. By the time the switches M1 and M2 toggle, the voltage on the first (local) capacitor C is equal to the value of the demodulation signal $V_{demod}$ at that time. When a trigger event occurs, switch M1 stops conducting and switch M2 shorts the first (local) capacitor C with the second (global) capacitor $C_{global}$. The inverter X4 is designed to have a larger propagation delay than inverter X3, resulting in a short pulse at the output of the AND gate X5. At this moment, a charge transfer will happen between the two capacitors C and $C_{global}$ and the voltage $V_{symbol}$ on the second capacitor $C_{global}$ will change according to the following formula:

$$V_{symbol}^{t} = \frac{C \cdot V_{demod}^{t} + C_{global} \cdot V_{symbol}^{t-1}}{C + C_{global}}$$

Hence, the change in voltage on the second capacitor $C_{global}$ depends on the two capacitances C and $C_{global}$, the present voltage $V_{demod}^{t}$ of the demodulation signal and the previously saved voltage $V_{symbol}^{t-1}$ in the second capacitor C. Depending on the ratio between the two capacitances, the size of voltage steps can be adjusted. A person skilled in the art can, as such, choose how quickly the output voltage $V_{symbol}$ reaches a predetermined voltage.

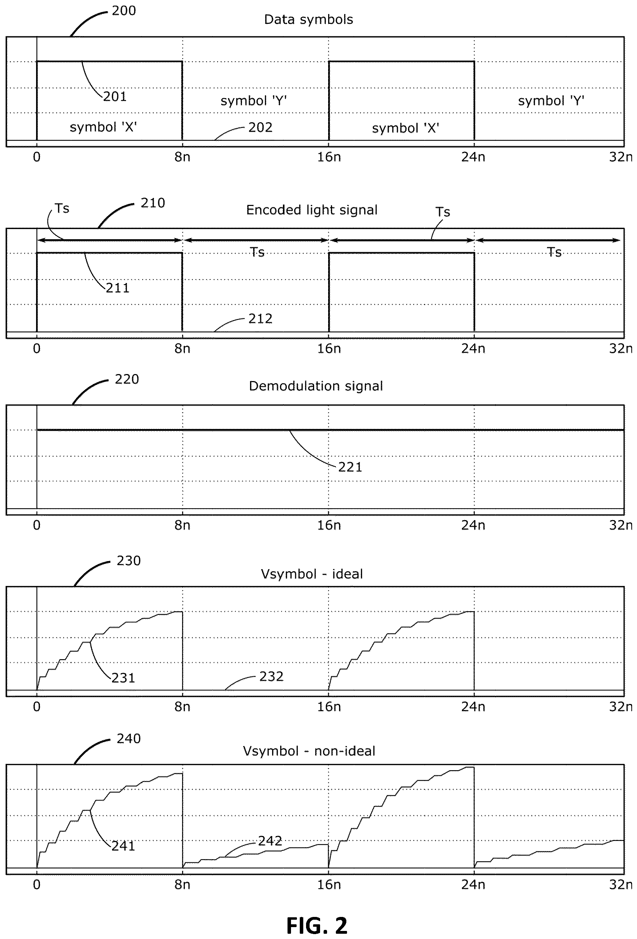

FIG.2 is a graphical representation of digital data symbols and their encoding in an optical signal, along with the corresponding demodulation signal and output voltage, according to embodiments of the present invention.

In FIG. 2, curve 200 illustrates a sequence of digital data symbols. Curve 210 represents the data symbols encoded in an optical signal, e.g. a light signal, which is intended to be incident at the receiver side of the data symbol detection circuit 90. Symbol 'X' 201 is encoded as the presence of photons 211 during the symbol period $T_s$, while symbol 'Y' 202 is represented by the absence of photons 212; this encoding approach also referred to as ON-OFF Keying (OOK). Curve 200, as an example only, shows the demodulation signal 221 set to a constant DC value. In the ideal (theoretical) case, shown in curve 230, there are no unwanted trigger events occurring and every trigger originates from a photon representing symbol 'X' 201, 211. Choosing the reset voltage $V_{reset}$ to be 0 V, the output voltage $V_{symbol}$ on the second capacitor $C_{global}$ will increase step by step, as shown by graph 231, with every trigger when symbol 'X' 201, 211 is present in the signal. For symbol 'Y' 202, 212, the voltage will remain at 0 V, as shown by part 232 of the graph.

In practical situations, however, unwanted trigger events will occur, either by ambient photons or dark triggers, adding noise to the output voltage. Curve 240 shows $V_{symbol}$ affected by unwanted triggers in the case of symbol 'X' 241 and symbol 'Y' 242. As can be seen from curve 240, unwanted triggers contribute equally to the output voltage $V_{symbol}$, compared to signal-induced triggers, compromising the SNR at the output and consequently, jeopardizing the certainty of the symbol decision.

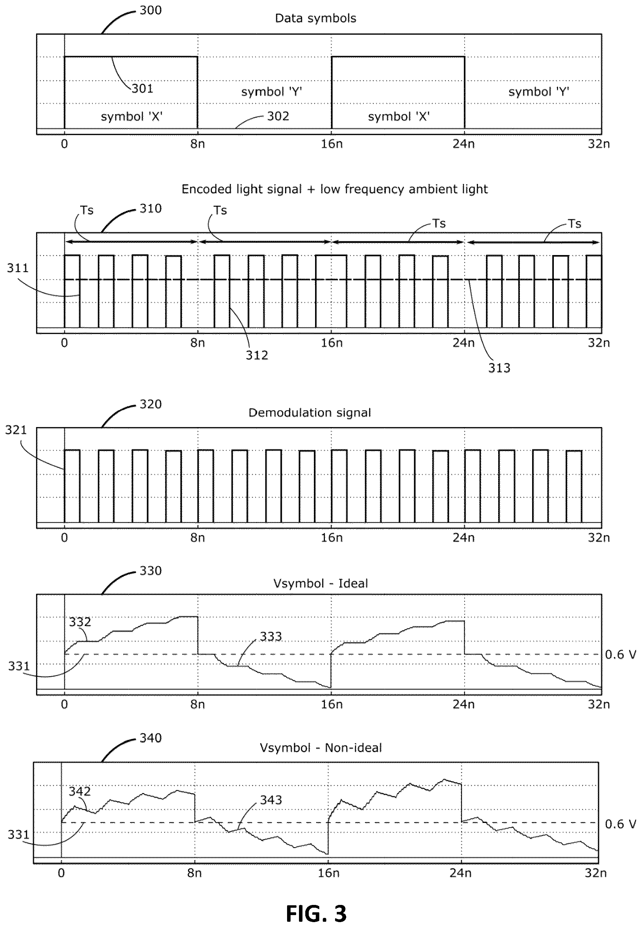

In FIG. 3, an approach in accordance with embodiments of the present invention is illustrated. Curve 320 shows the demodulation signal 321, as an example only, having a digital rectangular waveform. In curve 300, the data symbols 301 (symbol X), and 302 (symbol Y) are shown, while curve 310 depicts another way of symbol encoding. The data symbols 301, 302 are encoded in a rectangular waveform with a frequency equal to that of the demodulation signal 321. Symbol 'X' 301 is encoded in an alternating light signal 311 which is in phase with the demodulation signal 321, while the light signal 312 representing symbol 'Y' 302 has a phase difference of 180°

Curve 330 illustrates the ideal case, assuming no unwanted triggers. For this example, the reset voltage 331 is chosen to be 0.6 V and it is assumed that the demodulation signal 321 is synchronized and locked onto the frequency of the incoming light signal. For symbol 'X' 301, 311, the SPAD triggers occur when the demodulation signal 321 is high, so the output voltage $V_{symbol}$ integrates upwards 332. For symbol 'Y' the light induces trigger events when the demodulation signal 321 is low, so the output voltage $V_{symbol}$ integrates downwards 333.

Nevertheless, in the non-theoretical case, ambient photons could be present, inducing trigger events as well. Curve 310 presents the case where the average amount of ambient light over time has a low frequency or DC nature 313 (e.g. sunlight, road lights, etc.). The ambient photons 313, and consequently the ambient trigger events, will on average have the same contribution to the output voltage $V_{symbol}$ when the demodulation signal 321 is either high or low. In other words, the output voltage $V_{symbol}$ will integrate upwards and downwards with approximately the same amount in the case of low frequency ambient light.

Curve 340 shows the output voltage when the incident photon stream is a superposition of the data signal 311, 312 and the low frequency ambient light 313. For both data symbols 'X' 301, 311 and 'Y' 302, 312, the output voltage $V_{symbol}$ will still integrate up- 342 and downwards 343, respectively, enabling symbol decision with high certainty by the end of the symbol period $T_s$.

It is to be noted that, due to the Poisson nature of the photons (both signal and ambient), the output voltage $V_{symbol}$ at the end of the symbol period $T_s$ will show some noise. The effect of the dark triggers is similar to that of the ambient triggers and will add to the noise as well.

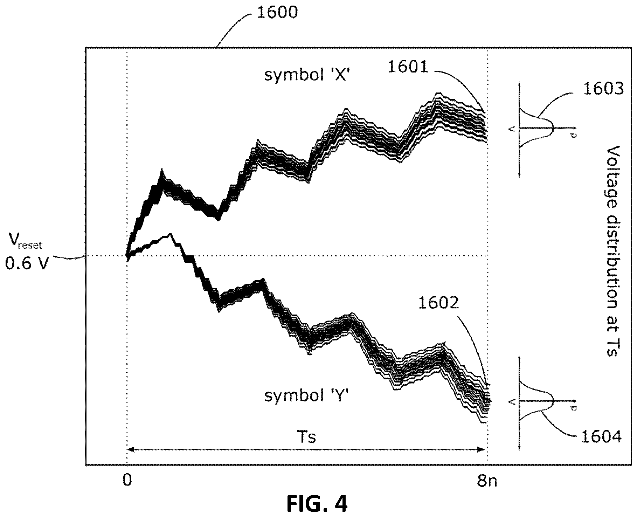

Curve 1600 in FIG. 4, illustrates the distinction between two different symbols 1601 and 1602 by means of an eye diagram. One can see that the noise 1603, 1604 induced on the output voltage is negligible compared to the total amplitude, indicating a high SNR can be obtained with embodiments of the present invention.

Although not illustrated in the drawings, in accordance with embodiments of the present invention it is possible to encode three different data symbols, two of them being a high and low voltage and a third represented by the absence of a correlated signal, which will keep the output voltage $V_{symbol}$ around the reset voltage $V_{reset}$. The uncorrelated photon triggers and dark triggers will have an equal contribution when $V_{demod}$ is either high or low, meaning that it will fluctuate around the reset voltage $V_{reset}$. Consequently, there are three different output voltage states possible for symbol decision: HIGH, LOW and the reset voltage itself.

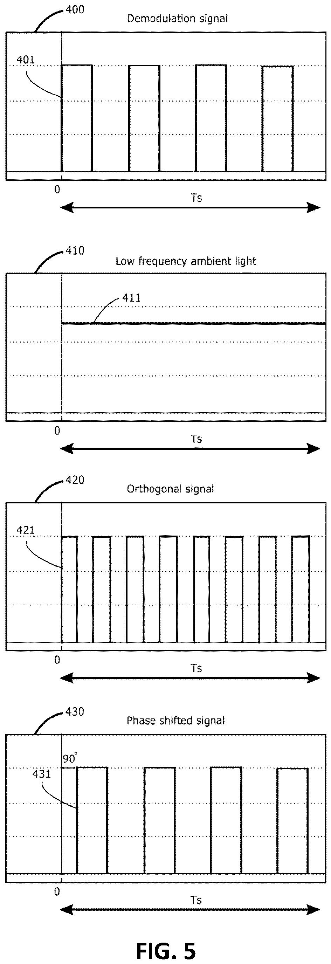

FIG. 5 illustrates that the circuit in FIG. 1 is able to cancel out, besides low frequency noise, ambient light modulated at a frequency orthogonal to the demodulation signal 401 shown in curve 400. The low frequency ambient light is illustrated as a DC signal 411 in curve 410. An example of an orthogonal modulated signal is shown in curve 420 of FIG. 5. Due to the orthogonality, the average number of trigger events caused by the ambient modulated light 421 will be approximately equal when the demodulation signal 401 is high or low. Consequently, the effect of the ambient modulated light 421 will be cancelled. In curve 420, only one orthogonal frequency is depicted, but this approach is applicable for all frequencies orthogonal to the demodulation signal 401.

In curve 430 of FIG. 5, the ambient modulated light 431 has, instead of an orthogonal frequency, the same frequency as the demodulation signal 401, but is shifted in time with a phase of 90°. Here as well, the ambient modulated light 431 can be cancelled out, for the same reasons as mentioned before.

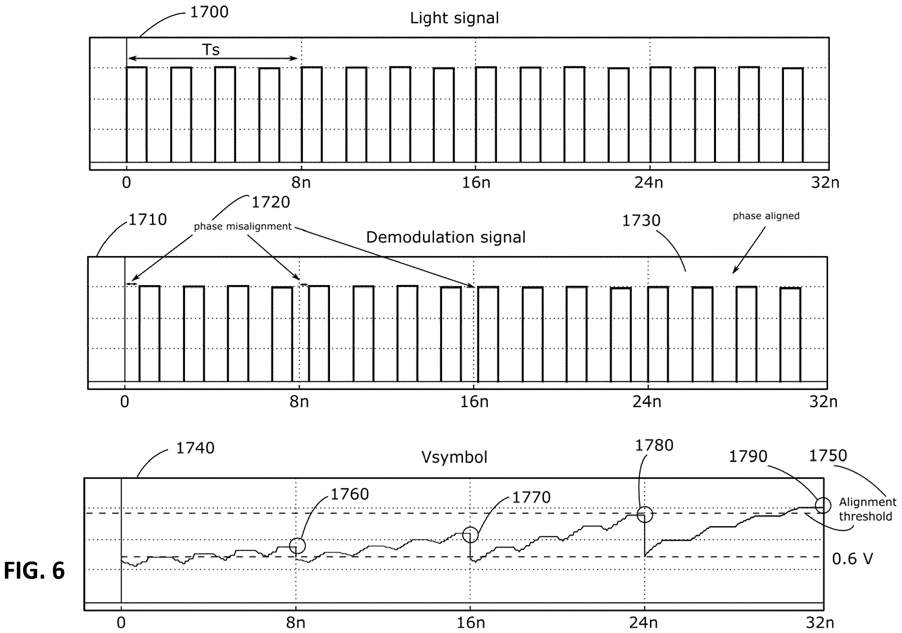

We now refer to FIG. 6. In practice, the phases and frequencies of the demodulation signal $V_{demod}$ and light signal containing the data will not always be aligned, as illustrated by the phase misalignment 1720 in curve 1710 (the frequency misalignment not being illustrated in the drawings). Therefore, a feedback system 140, such as for instance a PLL (illustrated in FIG. 1), is needed, to align both frequencies and phases. Curve 1740 shows an example of phase misalignment. The feedback system 140 can deduct the misalignment 1740 from voltage on capacitor $V_{symbol}$ 1760, 1770, 1780, 1790 after a predefined symbol interval $T_S$. In each consecutive symbol interval $T_S$, the demodulation signal $V_{demod}$ will be adjusted following the increasing output voltage $V_{symbol}$, i.e. the misalignment will decrease each symbol interval $T_S$ 1720. When both phase and frequency (not shown) match, as in 1730, the voltage $V_{symbol}$ on the second capacitor $C_{global}$ will exceed an alignment threshold 1750, and the demodulation signal $V_{demod}$ can be locked on the incident light signal 1700.

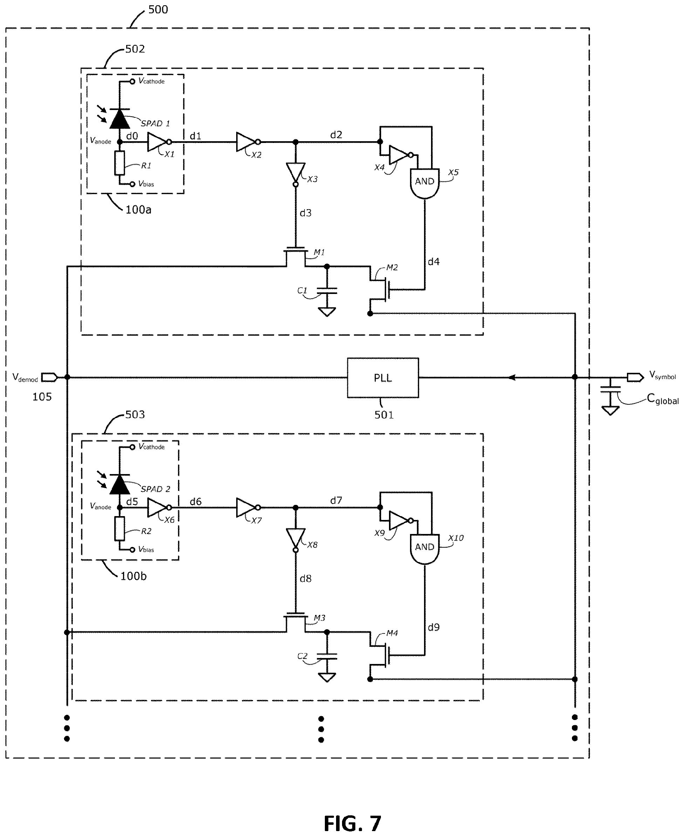

FIG. 7 shows a circuit similar to the one of FIG. 1; however, adopting multiple SPAD microcells 502, 503 in an array 500 with one global capacitor $C_{global}$. Here, each microcell 502, 503 has its own single photon detection circuit 100a, 100b. Each single photon detection circuit 100a, 100b comprises a SPAD SPAD 1, SPAD 2 of the which the anode d0, d4 is connected in series to a quenching resistor R1, R2, and an inverter X1, X6 which converts the current pulse received from the SPAD SPAD 1, SPAD 2 upon incidence of a photon into a clean digital voltage pulse d1, d6. Each microcell 502, 503 furthermore comprises a toggling circuit which generates non-overlapping signals d3, d4; d8, d9 enabling the toggling of a switched-capacitor system.

Each microcell 502, 503 contains part of the switched capacitor system, under the form of a local capacitor C1, C2 and switches M1, M2; M3, M4, meaning every microcell 502, 503 is able to contribute to the voltage $V_{symbol}$ on the global capacitor $C_{global}$, like mentioned before. The global capacitor $C_{global}$, however, is common to a plurality of, potentially all, microcells 502, 503. Also the reference signal generator 105, in the embodiment illustrated, is common to a plurality of, potentially all, microcells 502, 503. By increasing the number of microcells, the effect of dead time, the period immediately following the detection of a photon during which the SPAD is unable to detect another photon, can be reduced, and the detector can be made faster or (equivalently) can increase the saturation threshold.

The voltage on the second capacitor $C_{global}$, hence the voltage of the output signal $V_{symbol}$ is used by a feedback system 501, such as a Phase-Locked Loop (PLL), to adjust the properties of the demodulation signal $V_{demod}$, e.g. the phase and frequency, to optimize the correlation with the light signal containing the data symbols. If, as in the embodiment illustrated, the reference signal generator 105 is common to the microcells 502, 503, also the feedback system 501 can be common to the microcells 502, 503. In alternative embodiments (not illustrated), a feedback system can be provided per reference signal generator, potentially per microcell. In embodiments of the present invention, any switched capacitor circuit can be equipped with a feedback system such as a PLL circuit, locking on different frequencies and phases. For example, in case of multiple transmitters transmitting at different frequencies or phases, a feedback system could be designed for each of the transmitters.

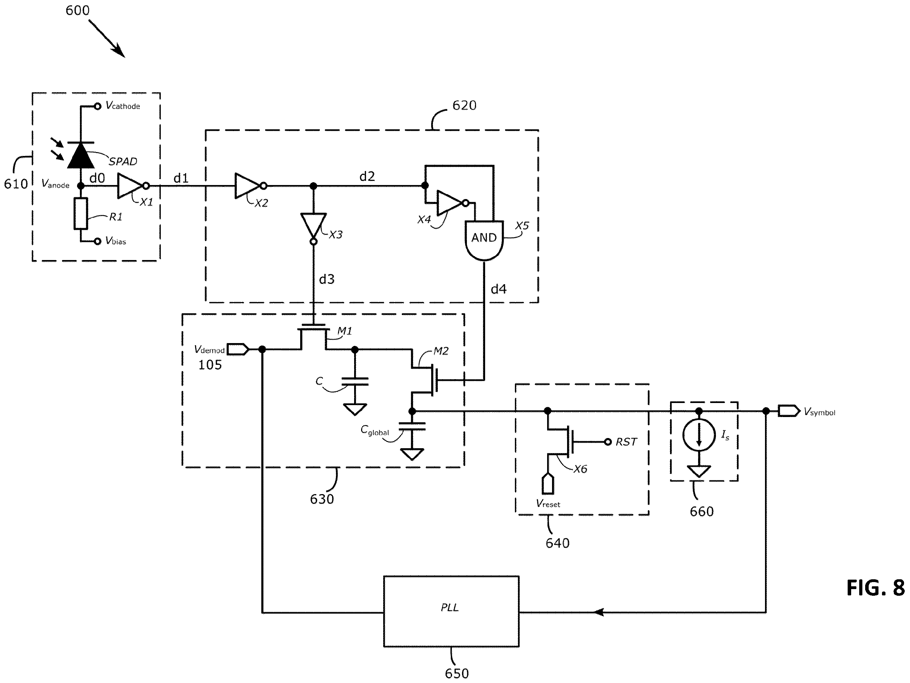

FIG. 8 illustrates another embodiment of a data symbol detection circuit 600 which enables an improved form of OOK. Although only one microcell is depicted, an array of microcells can be applied using the same principle. The embodiment illustrated shows a single-photon detection circuit 610, which generates a digital pulse d1 representing the incidence of a photon. The digital pulse d1 is coupled to a toggling circuit 620, which generates non-overlapping signals d3 and d4 enabling the toggling of a switched-capacitor system 630. The switched-capacitor system 630 comprises a reference signal generator 105 for generating a demodulation signal $V_{demod}$, or is provided with an input port for receiving a demodulation signal $V_{demod}$. The switched-capacitor system 630 further comprises two switches, e.g. transistor switches M1 and M2, a first (local) capacitor C and a second (global) capacitor $C_{global}$. The toggling circuit 620 and the switched-capacitor system 630 together form a discrimination mechanism configured to identify trigger events based on their temporal alignment with the reference demodulation signal $V_{demod}$, and a correlation system configured to adjust the contribution of each identified trigger event to an output signal $V_{symbol}$ based on its synchronization with the reference demodulation signal $V_{demod}$.

A reset function 640 is provided comprising a reset transistor X6 connected to the second capacitor $C_{global}$ which, upon actuation of the reset transistor X6 by means of the actuation signal RST, pulls the voltage towards the reset voltage $V_{reset}$ after a symbol period $T_s$.

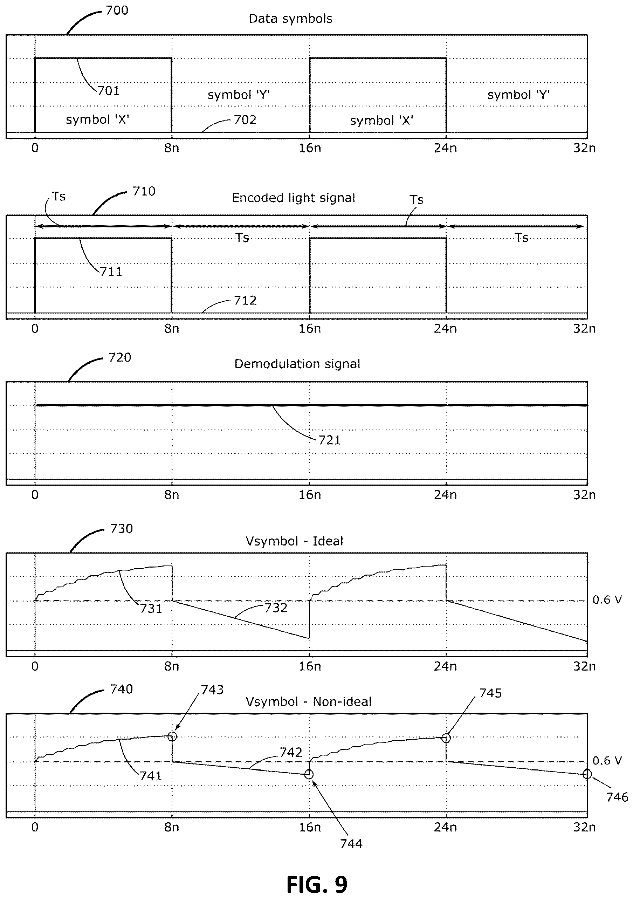

A current source (or current sink) 660 is used to add or remove charges from the second or global capacitor $C_{global}$ at a particular rate depending on the current $I_s$. The functioning is illustrated in FIG. 9.

Furthermore, the voltage on the second capacitor $C_{global}$, hence the voltage of the output signal $V_{symbol}$ is used by a feedback system 650, such as a Phase-Locked Loop (PLL), to adjust the properties of the demodulation signal $V_{demod}$, e.g. the phase and frequency, to optimize the correlation with the light signal containing the data symbols.

In curve 700 of FIG. 9, the data symbols 'X' 701 and 'Y' 702 are shown. In curve 710, the light signal is shown consisting of the encoded symbols, i.e. a presence of light in the case of symbol 'X', illustrated by 711 and an absence of light for symbol 'Y', shown by 712. The demodulation signal 721, in curve 720, is now chosen to be a constant high value. Unlike the example of FIG. 2, the output voltage $V_{symbol}$ is now pulled down by a rate determined by the current source 660 and the current $I_s$. In curve 730, the ideal case is shown, meaning the trigger events are only induced by the light signal representing the data 710, as shown in graph 731. In the case of symbol 'Y' 702, 712, the output voltage $V_{symbol}$ is pulled down resulting in a low voltage at the end of the symbol interval 732. For symbol 'X' 701, 711, the current source 660 will still remove charges from the output capacitor $C_{global}$, but the abundance of trigger events resulting from the light signal 711 will cause the voltage $V_{symbol}$ to go up by the end of the symbol interval $T_S$. In curve 740, the non-ideal case is shown. Again, the trigger events are only induced by the light signal representing the data 710, as shown in graph 741. The trigger events caused by unwanted photons and dark triggers are cancelled out by the current source 660, as illustrated by graph 742, yielding two distinguishable voltages 743, 744, 745, 746 at the end of the symbol interval for both symbols 'X' 743, 745 and 'Y' 742, 744.

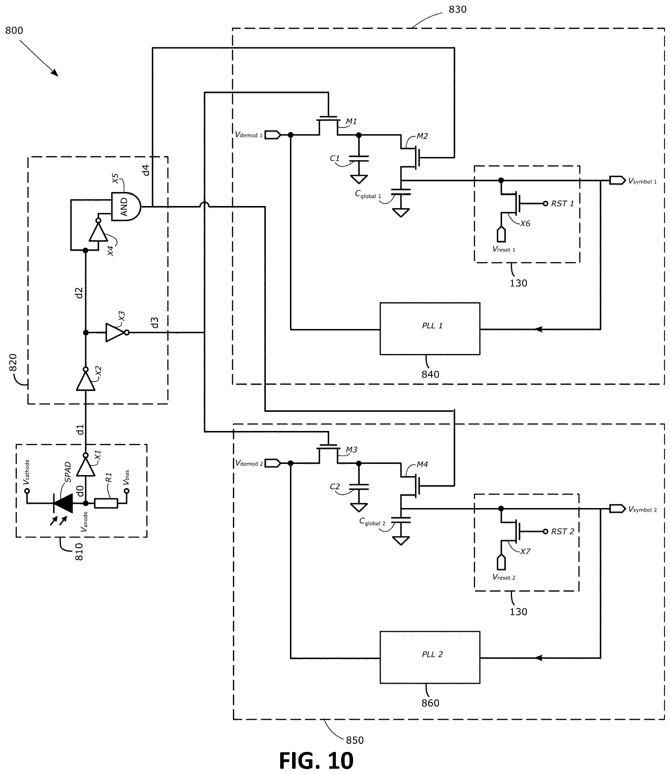

FIG. 10 depicts an optical data symbol circuit 800 according to yet another embodiment of the invention, comprising two demultiplexing circuits 830 and 850, enabling the demultiplexing of two independent data streams by using two global capacitors $C_{global\ 1}$ and $C_{global\ 2}$ and two demodulations signals $V_{demod\ 1}$ and $V_{demod\ 2}$.

The two independent data streams are captured by the SPAD of the single-photon detection circuit 810, which converts an impinging photon into a digital pulse d1, in any suitable way, for instance by means of the invertor X1 and the quenching resistor R1. The digital pulse d1 is applied to a toggling circuit 820, which functions as described above for other embodiments. The toggling circuit 820 generates two non-overlapping signals d3, d4, that are applied to the demultiplexing circuits 830, 850. The demultiplexing circuits 830, 850 each comprise a global capacitor $C_{global\ 1}$ and $C_{global\ 2}$ as described before.

Each demultiplexing circuit 830, 850 has its own feedback system 840, 860 which uses the corresponding output voltages $V_{symbol\ 1}$ and $V_{symbol\ 2}$ in the corresponding capacitors $C_{global1}$ and $C_{global2}$ to synchronize the demodulation signals $V_{demod\ 1}$ and $V_{demod\ 2}$ with the incoming light signal. In other embodiments, it is possible to implement one feedback system which takes in all output voltages and adjusts each demodulation signal accordingly. It is to be noted that, although not shown in FIG. 10, it is possible to use more than two data streams and more than two global capacitors.

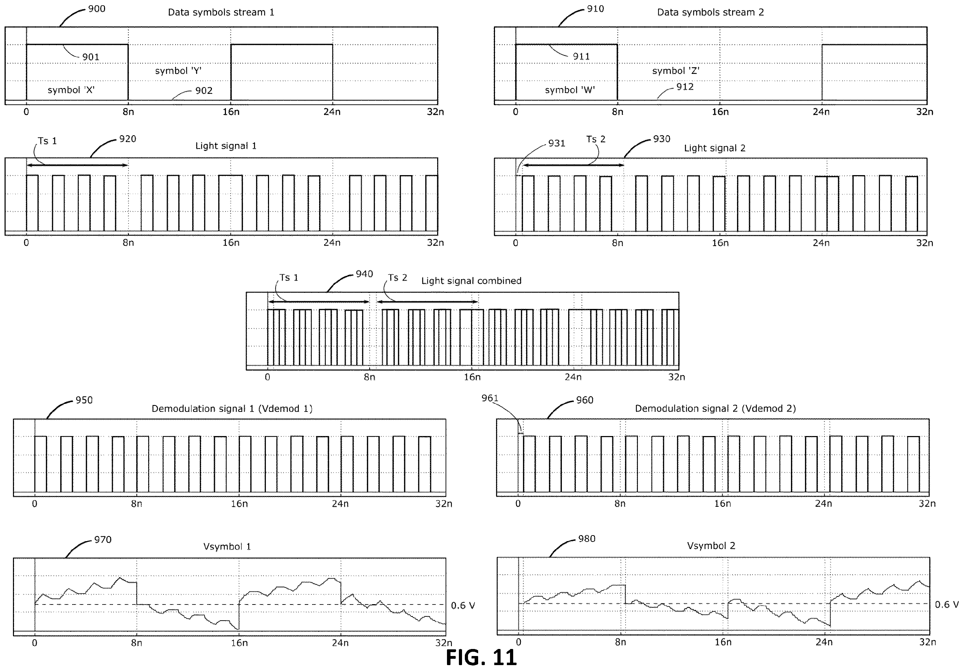

The functioning of the data symbol detection circuit 800 of FIG. 10 is illustrated in FIG. 11.

In FIG. 11, curves 900 and 910 show two independent data streams, comprising symbols X 901, 911 and symbols Y 902, 912 while curves 920 and 930 depict the encoded light signal representing the data streams. The two demodulation signals 950 and 960 have the same frequency but are shifted w.r.t. each other with a phase 961 of 90°. As shown in curves 920 and 930, the two data streams are encoded in such a way that each of them will be demodulated in one of the global capacitors $C_{global1}$ or $C_{global2}$, while being cancelled out in the other capacitor $C_{global\ 2}$ or $C_{global\ 1}$. In embodiments, multiple modulation/demodulation techniques can be adopted in one single system. For instance, although not shown in the drawings, it is possible to use multiple (orthogonal) frequencies, similar to the case laid out in FIG. 5, to encode the multiple data streams and demodulate in multiple capacitors.

Curves 970 and 980 illustrate the output voltages $V_{symbol\ 1}$ and $V_{symbol\ 2}$ over the global capacitors $C_{global\ 1}$ and $C_{global\ 2}$. It can be seen that at the end of each symbol period, the value of the symbols encode in the two data streams can be correctly discriminated.

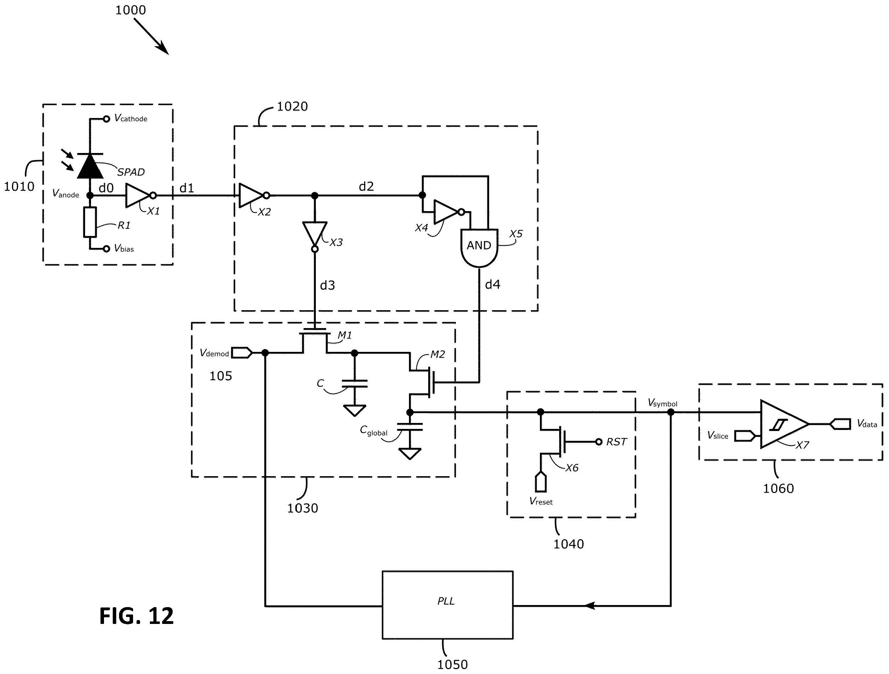

FIG. 12 illustrates an embodiment of an optical data symbol detection circuit 1000, including a single photon detection circuit 1010, a toggling circuit 1020, a switched capacitor system 1030, a reset function 1040 and a feedback system 1050; all as described in the context of previous embodiments. This particular embodiment furthermore comprises a symbol decision circuit 1060, for interpreting and converting received analog signals $V_{symbol}$ into corresponding digital data symbols $V_{data}$. The data symbols represent digital information that can be processed an understood by electronic devices. The symbol decision circuit 1060 can be implemented in any suitable way, depending on the specific requirements of the optical data symbol detection circuit. For example, the symbol decision circuit 1060 may be implemented as a comparator-based decision circuit, which uses a comparator to compare the signal $V_{symbol}$ against a predefined threshold $V_{slice}$, whereby the comparator corresponds to a decision level, and the output of the comparator indicates which level is most likely transmitted. Alternatively, a digital signal processing (DSP) based circuit may be used to analyse the signal $V_{symbol}$ and decide on the corresponding data symbol $V_{data}$, optionally implementing more sophisticated decision algorithms such as maximum likelihood detection, or machine learning-based classification. In the embodiment illustrated, the symbol decision circuit utilizes a symbol slicer X7, such as a comparator, to convert the analog voltage $V_{symbol}$ on the global capacitor $C_{global}$ to a digital signal $V_{data}$ representing the received data symbols, by mapping the received analog voltage $V_{symbol}$ to the nearest valid data symbol. It is to be noted that for this to occur sufficiently accurately, the SNR ratio on the analog voltage $V_{symbol}$ should be high enough to enable a good symbols decision.

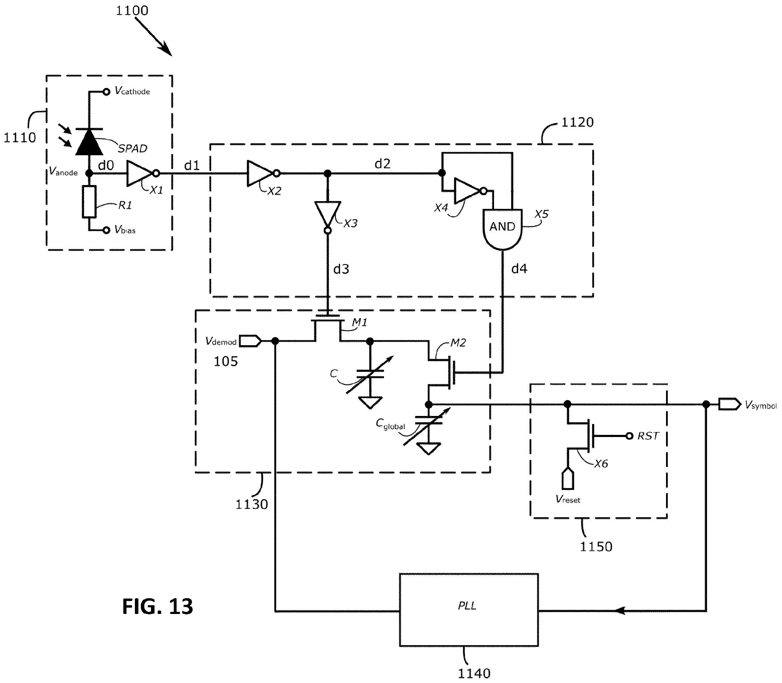

FIG. 13 shows an embodiment comprising a single photon detection circuit 1110, a toggling circuit 1120, a switched capacitor system 1130, a reset function 1150 and a feedback system 1140. Different compared to previously described embodiments is that in this embodiment the capacitors C and $C_{global}$ are made adjustable. In embodiments, by changing the ratio between the local capacitance C and global capacitance $C_{global}$, the rate at which the output voltage $V_{symbol}$ changes may be adjusted as desired. This can be done by adjusting one of the capacitances C or $C_{global}$ itself and/or by replacing $C_{global}$ by a capacitor bench which enables the selection of different combinations of capacitors in parallel (not illustrated in the drawings). Such embodiment enables to change the number of trigger events needed to reach a predetermined output voltage. For example, depending on the amount of ambient light it might be necessary to use more or less demodulation periods within one symbol interval to average out the effect of ambient and noise trigger events on the output.

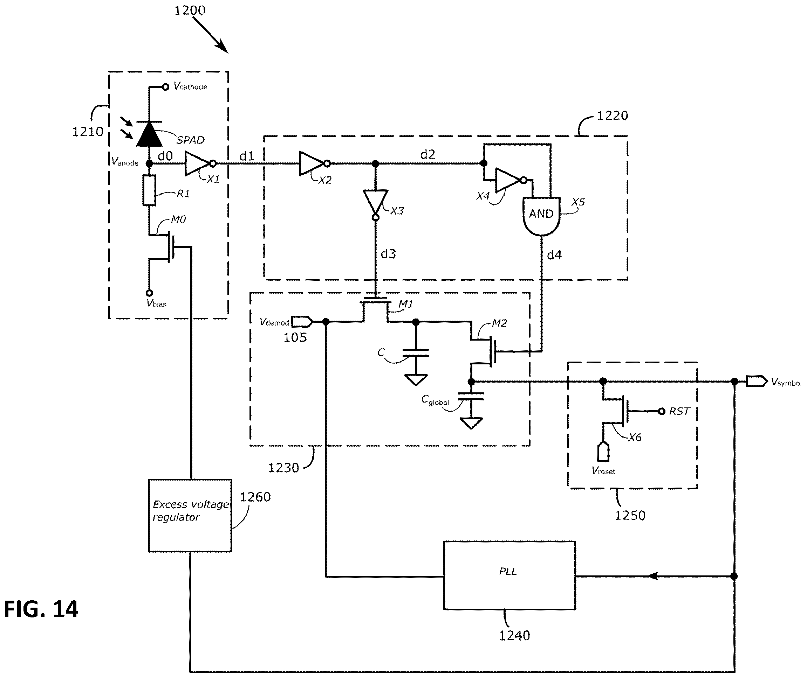

FIG. 14 shows an embodiment of a data symbol detection circuit 1200 comprising a single photon detection circuit 1210, a toggling circuit 1220, a switched capacitor system 1230, a reset function 1250 and a feedback system 1240; all as described in the context of previous embodiments. This particular embodiment furthermore adopts an excess voltage regulator 1260 for adjusting the sensitivity of the single-photon detection circuit 1210. The excess voltage regulator 1260 uses the output voltage $V_{symbol}$ on the global capacitor $C_{global}$ to regulate the excess voltage ($V_{cathode}$ - $V_{bias}$), and hence the photon detection probability of the SPAD. The excess voltage regulator 1260 may continuously monitor the input voltage $V_{symbol}$ supplied to it, and compare that voltage to a predefined threshold or reference voltage. If the voltage $V_{symbol}$ exceeds the predefined threshold, the excess voltage regulator 1260 activates its control mechanism to provide an output voltage that is applied for controlling to a switch M0 between a source providing a bias voltage $V_{bias}$ and the SPAD.

For example, in the presence of many signal-induced triggers and few ambient and dark triggers, the voltage $V_{symbol}$ on the output capacitor $C_{global}$ might reach a value (the predefined threshold) which enables symbol decision with high certainty, before the symbol period has finished. This means that it is not necessary to keep the highest sensitivity for the remaining part of the symbol period $T_s$. According to embodiments of the present invention, when the voltage $V_{symbol}$ reaches or surpasses the predefined threshold, the excess voltage regulator 1260 is operated to provide an output voltage to a gate of a transistor M0 between a source providing the bias voltage $V_{bias}$ and the SPAD, such that the SPAD is disconnected from the bias voltage $V_{bias}$, i.e. the SPAD is disarmed. According to alternative embodiments, the sensitivity of the SPAD can be dynamically reduced depending on the incident photon rate, i.e. depending on the speed at which the voltage $V_{symbol}$ increases.

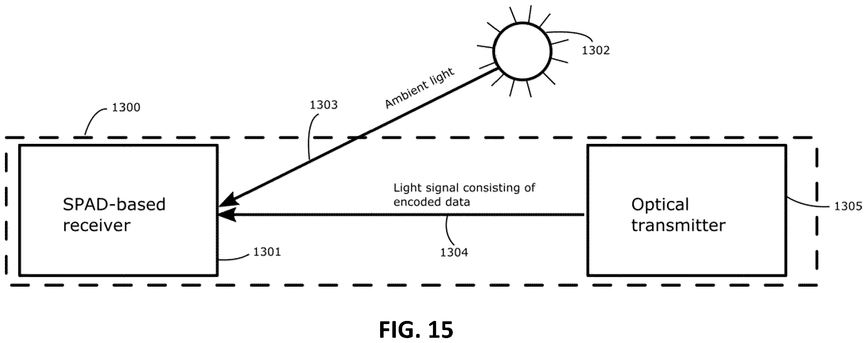

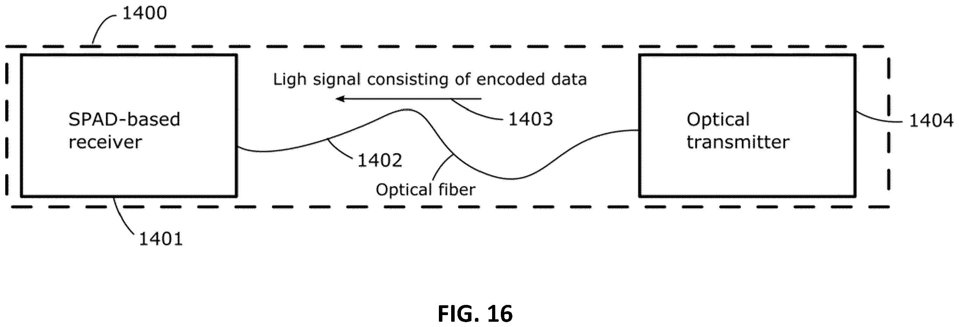

Multiple applications of use of embodiments of the present invention exist. Two examples are illustrated in FIG. 15 and FIG. 16.

FIG. 15 shows a transmitter-receiver communication system 1300 where encoded data is wirelessly transmitted by means of an optical transmitter 1305 in the form of a light signal 1304. The goal of the receiver 1301 is to detect the data symbols encoded within the light signal 1304 coming from the transmitter 1305. The light is transmitted through a wireless channel towards the receiver 1301. By the time this signal arrives at the receiver 1301, extra photons 1303 are added to the incident photon stream, due to an ambient light source, e.g. the sun 1302. By using a data symbol detection circuit according to embodiments of the present invention, it is possible to filter out these ambient photons 1303 and demodulate the desired data symbols 1304.

FIG. 16 illustrates a similar embodiment, implementing a transmitter-receiver communication system 1400 over a light-guiding channel, such as an optical fiber 1402, to guide transmitted light 1403 comprising encoded data, from an optical transmitter 1404 towards the receiver 1401.

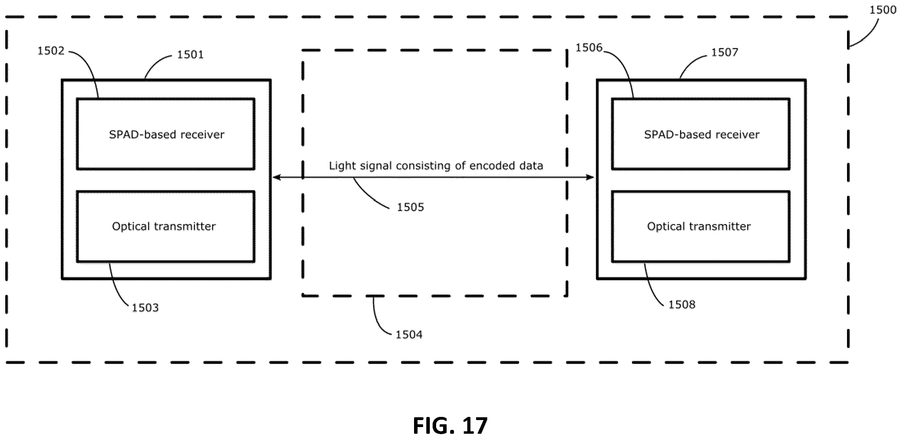

FIG. 17 illustrates another embodiment of the present invention, which implements a duplex communication system 1500. By adding an optical data transmitter 1503, 1508, containing a modulated light source, such as an LED or laser, in a same module as a receiver 1502, 1506, an optical transceiver 1501, 1507 can be made. This enables the communication of data in two different directions 1505, i.e. from transceiver 1501 to transceiver 1507 and vice-versa. As in FIG. 15 and FIG. 16, the communication can be done over a wireless channel or wave-guiding medium 1504.

In embodiments, the approaches mentioned can be extended to arrays, not just a single microcell as illustrated in the figures.

In some embodiments, it is also possible to adopt multiple modulation/demodulation techniques, in one single system. Therefore, the examples mentioned hereinabove are not limiting the scope of the invention.

In addition, although the examples illustrated in most figures include only a single microcell, the same approaches mentioned above can be extended in array form.

Example 1

An optical data symbol detection circuit was constructed with a single-photon detection circuit that generates trigger events when photons from an incident light signal strike the detector. The light signal encodes data symbols using pulse position modulation, where the position of a pulse within a symbol period represents the transmitted data.

A reference signal generator provides a sawtooth waveform as the reference demodulation signal. The sawtooth waveform has the same period as the symbol period used for encoding the data.

A discrimination mechanism, implemented using a comparator, identifies trigger events that occur when the sawtooth demodulation signal exceeds a predetermined threshold voltage. This selectively filters out trigger events that are likely noise-induced and not aligned with the expected pulse positions.

A correlation system, realized with a sample-and-hold circuit, captures the voltage of the sawtooth demodulation signal whenever an identified trigger event occurs. The captured voltage is proportional to the position of the trigger event within the symbol period. The sample-and-hold circuit transfers this voltage to a storage capacitor, which accumulates the voltages from multiple trigger events over the symbol period.

At the end of each symbol period, the accumulated voltage on the storage capacitor represents the received data symbol. A higher voltage indicates a pulse (and trigger event) occurred later in the symbol period, while a lower voltage signifies a pulse near the start of the period. An analog-to-digital converter reads the capacitor voltage and decodes it into the corresponding data symbol.

The reference signal generator allows adjustment of the sawtooth waveform's slope and DC offset. An adaptive feedback controller monitors the decoded data symbols and optimizes the sawtooth parameters to maintain the best correlation with the incoming light signal, compensating for any drift or variations in the transmitter or channel.

To handle a larger dynamic range of incident light intensities, the single-photon detection circuit includes an array of single-photon avalanche diodes (SPADs) with individually adjustable bias voltages. The bias voltages control the sensitivity of each SPAD. The adaptive feedback controller also adjusts these bias voltages based on the decoded symbols, increasing sensitivity when the light signal is weak and decreasing sensitivity to prevent saturation when the signal is strong.

For optical wireless communication, the transmitter uses an LED modulated with pulse position modulation to send the encoded light signal through free space. The receiver, with the described optical data symbol detection circuit, is placed within line of sight of the transmitter. The adaptive capabilities of the receiver enable robust data recovery despite variations in the ambient light conditions and link distance.

In an optical fiber communication scenario, the transmitter couples the pulse position modulated light signal from a laser diode into a fiber. The receiver is connected to the other end of the fiber and utilizes the optical data symbol detection circuit to extract the transmitted data. The high sensitivity and noise rejection capabilities of the SPAD-based receiver allow for long-distance transmission and high data rates.

This optical data symbol detection circuit provides a compact and efficient solution for intensity modulated optical communication systems. Its single-photon sensitivity, noise rejection, and adaptive features enable reliable data recovery in various application scenarios.

Example 2

An optical data symbol detection circuit was designed for use in a visible light communication system. The system employed on-off keying (OOK) modulation, where the presence of light within a symbol period represented a binary '1', and the absence of light represented a '0'.

The single-photon detection circuit utilized a 32x32 array of single-photon avalanche diodes (SPADs) optimized for detection in the visible wavelength range. Each SPAD had a diameter of 20 $\mu$m and was operated in Geiger mode with a bias voltage of 3 V above its breakdown voltage. The SPADs were passively quenched with individual 100 k$\Omega$ resistors and active recharged using a global gating signal.

The reference signal generator produced a square wave demodulation signal with a 50% duty cycle, synchronized to the symbol rate of the OOK modulation. The frequency of the demodulation signal was set to 1 MHz, corresponding to a data rate of 1 Mbps.

The discrimination mechanism consisted of a high-speed comparator and an AND gate for each SPAD in the array. The comparator detected the leading edge of a SPAD trigger event, while the AND gate checked if the trigger event was coincident with the high level of the demodulation signal. Only trigger events passing both conditions were considered valid and forwarded to the correlation system.

The correlation system employed a switched-capacitor integrator for each SPAD channel. When a valid trigger event occurred, the integrator added a fixed charge packet to its output capacitor. The charge packet magnitude was set to produce a 1 mV increase in the output voltage per trigger event. The output capacitors of all SPAD channels were connected in parallel, effectively summing their contributions.

A reset switch discharged the integrator output capacitors at the end of each symbol period, preparing them for the next symbol. The resulting output voltage at the end of a symbol period was proportional to the number of photons detected during the high level of the demodulation signal.

A symbol decision circuit, consisting of a latched comparator, converted the analog output voltage to a binary value. The comparator threshold was set to 50 mV, corresponding to 50 photons per symbol period. Output voltages above this threshold were decoded as a '1', while voltages below the threshold were decoded as a '0'.

An adaptive feedback system monitored the bit error rate (BER) of the decoded symbols and adjusted the SPAD bias voltages and comparator threshold to maintain a target BER of $10^{-6}$. The feedback system also controlled a variable optical attenuator (VOA) placed in front of the SPAD array to prevent saturation under strong illumination conditions.

The visible light communication system was tested in a typical office environment with fluorescent lighting. The transmitter used a white LED with a bandwidth of 10 MHz, modulated by an OOK signal at 1 Mbps. The receiver, incorporating the optical data symbol detection circuit, was placed 2 meters away from the transmitter.

Under these conditions, the system achieved a BER of $10^{-7}$, demonstrating reliable communication in the presence of ambient light noise. The adaptive feedback system effectively maintained the SPAD bias voltages and comparator threshold for optimal performance, even as the ambient light level varied throughout the day.

The high sensitivity and temporal resolution of the SPAD array, combined with the synchronous demodulation and adaptive control, enabled robust visible light communication in practical indoor environments. This optical data symbol detection circuit shows promise for applications such as wireless device charging, internet of things (IoT) connectivity, and location-based services using visible light beacons.

While the invention has been illustrated and described in detail in the drawings and foregoing description, such illustration and description are to be considered illustrative or exemplary and not restrictive. The foregoing description details particular embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that particular measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. An optical data symbol detection circuit (90, 500, 600, 800, 1000, 1100, 1200) comprising:

   - at least one single-photon detection circuit (100, 610, 810, 1010, 1110, 1210) configured to generate trigger events (d1) in response to an incident light signal comprising photons, the incident light signal encoding data symbols;
   - a reference signal generator (105) configured to provide a reference demodulation signal ($V_{demod}$);
   - a discrimination mechanism (125) configured to identify trigger events based on their temporal alignment with the reference demodulation signal ($V_{demod}$); and
   - at least one correlation system (126) configured to adjust the contribution of each identified trigger event to an output signal ($V_{symbol}$) based on its synchronization with the reference demodulation signal ($V_{demod}$).

2. The optical data symbol detection circuit (90, 500, 600, 800, 1000, 1100, 1200) in accordance with claim 1, wherein the discrimination mechanism and the correlation system comprise

   - at least one toggling circuit (110, 620, 820, 1020, 1120) configured to generate two non-overlapping signals (d3, d4; d8, d9) from the trigger event, and
   - at least one switched capacitor circuit (120,630, 1030, 1130, 1230) comprising

- a local capacitor (C) for receiving charge form the reference demodulation signal ($V_{demod}$),
- a global capacitor ($C_{global}$) for accumulating charge corresponding to trigger events, the accumulated charge being indicative of the received data symbols, and
- a switching mechanism comprising

a first switch (M1) coupled between the reference signal generator (105) and the local capacitor (C), and a second switch (M2) coupled between the local capacitor (C) and the global capacitor ($C_{global}$),

the non-overlapping signals (d3, d4; d8, d9) generated by the toggling circuit (110, 620, 820, 1020, 1120) being used for controlling the first switch (M1) and second switch (M2), respectively.

3. The optical data symbol detection circuit (500) in accordance with any of the previous claims, comprising a plurality of single-photon detection circuits (100a, 100b).

4. The optical data symbol detection circuit (500) in accordance with claim 3 when dependent on claim 2, wherein each single-photon detection circuit (100a, 100b) is associated with a local capacitor (C1, C2) and a switching mechanism for transferring charge in response to trigger events to a global capacitor ($C_{global}$).

5. The optical data symbol detection circuit (800) in accordance with claim 2, further comprising a demultiplexing circuit for processing multiple independent data streams encoded in the incident light signal.

6. The optical data symbol detection circuit (800) in accordance with claim 5, wherein the demultiplexing circuit includes multiple global capacitors ($C_{global\ 1}$, $C_{global\ 2}$), each associated with a different data stream and corresponding demodulation signal ($V_{demod\ 1}$, $V_{demod\ 2}$).

7. The optical data symbol detection circuit (90, 600, 800, 1000, 1100, 1200) in accordance with any of claims 2 to 6, further comprising a reset mechanism (130, 640, 1040, 1150, 1250) configured to reset the voltage on the global capacitor to a predetermined reset voltage after a symbol period ($T_s$).

8. The optical data symbol detection circuit (1000) in accordance with any of the claims 2 to 7, further comprising a symbol decision circuit (1060) including a comparator (X7) for converting an analog voltage

($V_{symbol}$) on the global capacitor ($C_{global}$) to a digital signal ($V_{data}$) representing the received data symbols.

9. The optical data symbol detection circuit (90, 500, 600, 1000, 1100, 1200) in accordance with any of the previous claims, wherein the reference signal generator (105) is configured to provide a reference demodulation signal ($V_{demod}$) with adjustable modulation characteristics.

10. The optical data symbol detection circuit (90, 500, 600, 1000, 1100, 1200) in accordance with claim 9, furthermore comprising at least one adaptive feedback system (140, 501, 650, 1050, 1140, 1240) connected to the reference signal generator (105), configured to dynamically adjust the modulation characteristics of the reference demodulation signal ($V_{demod}$) based on the output signal ($V_{symbol}$) to optimize the correlation with encoded data symbols in the incident light signal.

11. The optical data symbol detection circuit (90, 500, 600, 800, 1000, 1100, 1200) in accordance with any of the previous claims, wherein the correlation system is configured such that only trigger events aligned with predetermined active periods of the reference demodulation signal contribute to the output signal.

12. The optical data symbol detection circuit (90, 500, 600, 800, 1000, 1100, 1200) in accordance with any of the previous claims, wherein the at least one single-photon detection circuit (100, 610, 810, 1010, 1110, 1210) comprises a single-photon avalanche diode (SPAD).

13. The optical data symbol detection circuit (90, 500, 600, 800, 1000, 1100, 1200) according to any one of the preceding claims, wherein the reference signal generator (105) is configured to generate a reference demodulation signal ($V_{demod}$) that is a periodic waveform.

14. A method for detecting optical data symbols, the method comprising:

- generating a reference demodulation signal;
- converting incident light into an electrical signal by generating trigger events using a single-photon detection circuit;
- identifying trigger events based on their temporal alignment with the reference demodulation signal; and
- adjusting the contribution of each identified trigger event to an output signal based on its synchronization with the reference demodulation signal.

**15.** A data symbol transmitter-receiver system, comprising

- a data symbol transmission circuit comprising

a photon source, and
a photon source modulator for modulating the photon source so as to generate a light signal encoding data symbols,

- an optical data symbol detection circuit (90, 500, 800, 1000) according to any one of claims 1 to 13.

**FIG. 1**

**FIG. 2**

Data symbols

symbol 'X'    symbol 'Y'    symbol 'X'    symbol 'Y'

0        8n        16n        24n        32n

Encoded light signal + low frequency ambient light

Ts    Ts    Ts    Ts

0        8n        16n        24n        32n

Demodulation signal

0        8n        16n        24n        32n

Vsymbol - Ideal

0.6 V

0        8n        16n        24n        32n

Vsymbol - Non-ideal

0.6 V

0        8n        16n        24n        32n

**FIG. 3**

**FIG. 4**

FIG. 5

FIG. 6

**FIG. 7**

FIG. 8

**FIG. 9**

FIG. 10

Data symbols stream 1

900

901

symbol 'X'

symbol 'Y'

902

0    8n    16n    24n    32n

Data symbols stream 2

910

911

symbol 'W'

symbol 'Z'

912

0    8n    16n    24n    32n

Ts 1    920    Light signal 1

0    8n    16n    24n    32n

931    Ts 2    930    Light signal 2

0    8n    16n    24n    32n

Ts 1    940    Ts 2    Light signal combined

0    8n    16n    24n    32n

950    Demodulation signal 1 (Vdemod 1)

0    8n    16n    24n    32n

961    960    Demodulation signal 2 (Vdemod 2)

0    8n    16n    24n    32n

970    Vsymbol 1

0.6 V

0    8n    16n    24n    32n

980    Vsymbol 2

0.6 V

0    8n    16n    24n    32n

FIG. 11

FIG. 12

FIG. 13

**FIG. 14**

**FIG. 15**

**FIG. 16**

EP 4 672 639 A1

**FIG. 17**

Europäisches
Patentamt

European
Patent Office

Office européen
des brevets

## EUROPEAN SEARCH REPORT

**Application Number**

EP 24 18 5537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/326391 A1 (CHO JEONG-SIK [KR] ET AL) 12 November 2015 (2015-11-12) * paragraphs [0003] - [0012] * * paragraphs [0037] - [0041] * * figure 4 * | 1-15 | INV. H04B10/70 |
| A | US 2024/012119 A1 (KUIJK MAARTEN [DE] ET AL) 11 January 2024 (2024-01-11) * the whole document * | 1-15 | |
| A | EP 2 051 411 B1 (MITSUBISHI ELECTRIC CORP [JP]; UNIV HOKKAIDO NAT UNIV CORP [JP]) 7 March 2012 (2012-03-07) * paragraphs [0002] - [0026] * * paragraphs [0028] - [0035] * * paragraph [0045] * * paragraph [0063] * * paragraph [0071] * * figures 1, 7 * | 1-15 | |
| A | WO 2019/069085 A1 (UNIV STRATHCLYDE [GB]; UNIV COURT UNIV OF EDINBURGH [GB]) 11 April 2019 (2019-04-11) * the whole document * | 1-15 | **TECHNICAL FIELDS SEARCHED (IPC)** H04B |

The present search report has been drawn up for all claims

| Place of search | Date of completion of the search | Examiner |
|---|---|---|
| Munich | 27 November 2024 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5537

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | Publication date |
|---|---|---|---|
| US 2015326391 A1 | 12-11-2015 | CN 104769882 A | 08-07-2015 |
| | | KR 20140055146 A | 09-05-2014 |
| | | US 2015326391 A1 | 12-11-2015 |
| | | WO 2014069773 A1 | 08-05-2014 |
| US 2024012119 A1 | 11-01-2024 | CN 116635741 A | 22-08-2023 |
| | | EP 4204849 A1 | 05-07-2023 |
| | | KR 20230058691 A | 03-05-2023 |
| | | US 2024012119 A1 | 11-01-2024 |
| | | WO 2022043480 A1 | 03-03-2022 |
| EP 2051411 B1 | 07-03-2012 | EP 2051411 A1 | 22-04-2009 |
| | | JP 4775919 B2 | 21-09-2011 |
| | | JP WO2008015758 A1 | 17-12-2009 |
| | | US 2010226659 A1 | 09-09-2010 |
| | | WO 2008015758 A1 | 07-02-2008 |
| WO 2019069085 A1 | 11-04-2019 | NONE | |

EPO FORM P0459